# EUROPEAN PATENT SPECIFICATION

(11) **EP 0 814 066 B1**
(45) Date of publication and mention of the grant of the patent: **26.10.2005**
(21) Application number: 96304538.0
(22) Date of filing: 18.06.1996
(51) Int. Cl.: C04B 26/16, C08F 283/00

(54) **Molding compounds, method for preparing the same, and moldings produced from the same**
Formmasse, Verfahren zu ihrer Herstellung und Formteile daraus
Compositions de moulage, leur méthode de préparation et les produits moulés obtenus à partir de ceux-ci

(43) Date of publication of application: 29.12.1997
(73) Proprietor: NIPPON SHOKUBAI CO., LTD., Chuo-ku, Osaka-shi, Osaka-fu 541 (JP)
(72) Inventor: Matsuda, Yasuhiro, Nara-shi, Nara 631 (JP); Yukawa, Nobuhiko, Akashi-shi, Hyogo 674 (JP)
(74) Representative: West, Alan Harry

(56) References cited:
- EP-A- 0 272 975
- GB-A- 982 222
- US-A- 3 700 752

## Description

The present invention relates to molding compounds which are suitable for the production of moldings having markings like some kinds of granite or marble, or a mottled appearance on surfaces thereof, and also relates to a method for preparing the molding compounds, and moldings made from the molding compounds.

As a method for producing artificial stones (moldings) resembling marble or agate in appearance by mixing a marking material for producing a so-called streaked, or scrolled appearance with a synthetic resin to be a body, the present inventors proposed the following method. In this method (Japanese Publication for Unexamined Patent Application No. 157146/1990 (Tokukaihei 2-157146), a semi-cured gelatinous polymeric product with a specified viscosity (the product is deformed with an application of external pressure) is obtained by three-dimensionally cross-linking a curable resin with a curing agent such as organic peroxide. The semi-cured gelatinous polymeric product is used as the marking material. After crushing the semi-cured gelatinous polymeric product into a predetermined size, it is mixed with a synthetic resin to be a body. The resulting mixture is cured and molded to produce the artificial stone. Namely, in the conventional artificial stone, markings are developed on the surface thereof by the semi-cured gelatinous polymeric product.

However, since the above-mentioned semi-cured gelatinous polymeric product is obtained by polymerizing the curable resin by a radical polymerization reaction, it is difficult to control the viscosity and hardness to be suitable values. Therefore, when the semi-cured gelatinous polymeric product is mixed with the synthetic resin to be the body and then the mixture is kneaded using, for example, a kneader, if the viscosity and hardness are not adjusted to have values within predetermined ranges, the surface of the semi-cured gelatinous polymeric product dissolves. More specifically, part of the semi-cured gelatinous polymeric product dissolves in the synthetic resin, and border lines between the semi-cured gelatinous polymeric product and the synthetic resin (i.e., markings) become unclear. As a result, the shapes of the crushed surfaces of the semi-cured gelatinous polymeric product are not retained, preventing the formation of artificial stones having desired markings developed thereon.

Moreover, in order to produce artificial stones having an appearance resembling a natural stone, for example, granite, in general, several kinds of resin particles which are colored in different color tones to make markings like the natural stone are dispersed into a synthetic resin to be the body, and curing is performed. The above-mentioned resin particles are prepared by roughly crushing a mass of synthetic resin hardened product to be the resin particles with, for example, a hammer, pulverizing the crushed synthetic resin hardened product into fine particles with a crusher, such as jaw crusher, roll crusher and hammer mill, and classifying the pulverized product so as to arrange the particles into a class of a predetermined particle diameter.

However, in this method, it takes a time for crushing, and a large amount of resin particles having diameters smaller than the desired diameter are generated by crushing. Thus, the yield (a so-called crushing yield) of resin particles which can be used in the production of the artificial stone from the mass of the above-mentioned synthetic resin hardened product is lowered. In addition, when resin particles are dispersed into a synthetic resin to be the body and cured, the adhesive strength is lowered at the boundary surface between the synthetic resin and the resin particles which have already been cured, thereby deteriorating the physical properties, for example, the mechanical strength of the resulting artificial stone. Furthermore, in general, the resin particles are porous. When such resin particles are mixed with the synthetic resin, they absorb the synthetic resin to be the body. As a result, the viscosity of the synthetic resin increases and the degree of dispersion of the resin particles decreases, causing gathering of the resin particles. Namely, the above-mentioned conventional method suffers from such a drawback that it is difficult to produce an artificial stone having favorable physical properties including mechanical strength, and desired markings developed thereon.

It is an object of the present invention to provide molding compounds which can be easily crushed at a good yield and is capable of retaining the shapes of the crushed surfaces and developing desired markings even when mixed with, for example, a synthetic resin to be a body, and to provide a method for preparing such molding compounds. It is another object of the present invention to provide a method for preparing molding compounds suitable for the manufacture of moldings having on surfaces thereof various markings something like that of granite, marble, or a so-called mottled appearance. It is still another object of the present invention to provide moldings, for example, artificial stones, having excellent physical properties such as mechanical properties and desired markings developed thereon.

In order to achieve the above objects, the present inventors have eagerly studied molding compounds and a method for preparing the molding compounds. It was found as a result of study that molding compounds formed by compositions including a reaction compound produced by linking a starting material A having a plurality of substituent groups, with a starting material B reactive with the starting material A by a reaction other than a radical reaction and a monomer 1 in liquid phase which is polymerizable by a radical polymerization reaction have suitable softness, are easily cut into predetermined size, and are capable of retaining the shapes of the crushed surfaces and developing desired markings even when mixed with, for example, a synthetic resin to be the body. The present inventors also found a method for preparing molding compounds which have excellent physical properties such as mechanical strength and are capable of developing desired markings on surface thereof by forming a reaction compound by linking the starting material A with the starting material B by a reaction other than a radical reaction under the presence of the monomer 1, adding the reaction compound to a monomer 2 copolymerizable with the monomer 1, and crushing the reaction compound into a predetermined size. The present invention was completed based on these findings.

More specifically, in order to achieve the above objects, molding compounds of the present invention are characterized by that they are prepared by crushing into a predetermined size, a composition including a reaction compound produced by linking the starting material A having a plurality of substituent groups, with the starting material B reactive with the starting material A by a reaction other than a radical reaction, and a monomer 1 in liquid phase which is polymerizable by a radical polymerization reaction.

In this structure, since the molding compounds have suitable softness, and they can be easily crushed with a relatively small force. In addition, since the molding compounds have suitable viscosity, particles with a diameters smaller than a desired particle diameter can hardly be generated by crushing, thereby increasing a so-called crushing yield. Namely, in this structure, it is possible to obtain the molding compounds capable of being crushed easily with a relatively small force and achieving a high crushing yield.

Moreover, in order to achieve the above object, a method for preparing molding compounds of the present invention is characterized by forming a reaction compound by linking the starting material A with the starting material B by a reaction other than a radical reaction under the presence of the monomer 1, and crushing the reaction compound into a predetermined size.

This method allows the preparation of molding compounds capable of developing desired markings, for example, a so-called streaked, or scrolled appearance. Since the molding compounds have so-called streaked, or scrolled markings therein, it is possible to easily produce three-dimensional moldings, for example, artificial stones having an appearance resembling natural stones, such as granite and marble, in a simplified manner.

Furthermore, in order to achieve the above objects, moldings of the present invention are characterized that they are produced by molding the molding compounds formed by crushing the above-mentioned composition into a predetermined size.

In this structure, it is possible to easily produce moldings, for example, artificial stones having excellent physical properties such as mechanical strength, and desired markings thereon.

Additionally, in order to achieve the above objects, a method for preparing molding compounds of the present invention is characterized by including forming a reaction compound by linking the starting material A with the starting material B by a reaction other than a radical reaction under the presence of the monomer 1, adding the reaction compound to a monomer 2 copolymerizable with the monomer 1, and crushing the reaction compound into a predetermined size.

In this method, it is possible to easily prepare molding compounds having excellent physical properties and a desired mottled appearance in which a so-called sharp edge surface is formed on the surfaces thereof, in a simplified manner. Moreover, in this method, so-called streaked or scrolled markings are formed within the molding compounds. It is therefore possible to easily produce three-dimensional moldings, for example, artificial stones having an appearance resembling natural stones, such as granite and marble, in a simplified manner.

For a fuller understanding of the nature and advantages of the invention, reference should be made to the ensuing detailed description taken in conjunction with the accompanying drawings.

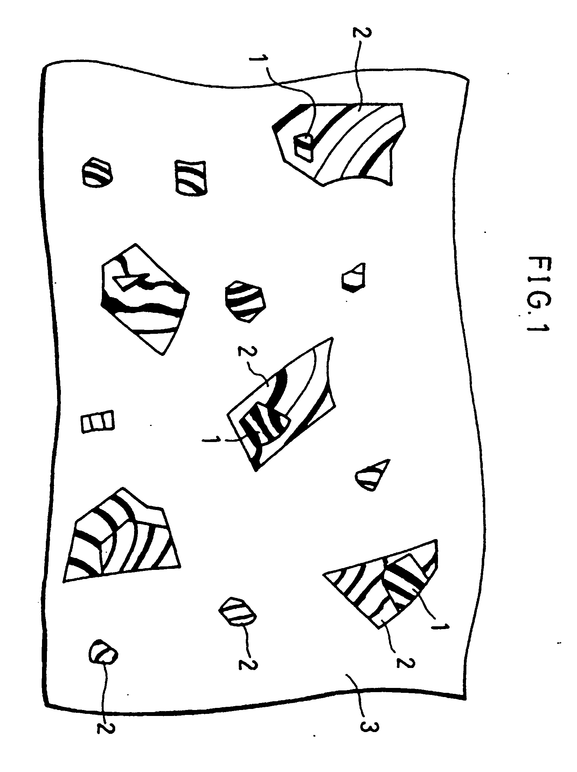

Fig. 1 is a front view of an essential section of an artificial stone (a molding) produced by a method according to Example 10 of the present invention.

The following description will discuss the present invention in detail.

A molding compound of the present invention (hereinafter referred to as molding compound A for the sake of convenience) is prepared by crushing into a predetermined size, a composition including a reaction product formed by linking a starting material A containing a plurality of reactive substituent groups, with a starting material B reactive with the starting material A by a reaction other than a radical reaction, and a monomer 1 in liquid phase which is polymerizable by a radical polymerization reaction.

The starting material A as a starting material of the molding compound A of the present invention is not particularly limited as long as it is a compound that is linked with the starting material B by a reaction other than a radical reaction. As the starting material A, monomers having more than one hydroxyl group, carboxyl group or the like as the reactive substituent group in one molecule, and their polymers (i.e., thermoplastic resins) are given. Examples of such monomers are: polyhydric alcohols such as ethylene glycol, diethylene glycol, 1,4-butanediol, neopentyl glycol, trimethylol-propane, and bisphenol A; and polyhydric carboxylic acids such as malonic acid, adipic acid, isophthalic acid, and terephthalic acid. Examples of such polymers are: vinyl ester resins; unsaturated polyester resins; saturated polyester resins; polymers of acrylic acid compounds, such as 2-hydroxyethyl methacrylate; and copolymers of acrylic acid compounds and aromatic vinyl compounds such as styrene and α-methyl styrene.

The starting material B as a starting material of the molding compound A of the present invention is a so-called thickening compound, and is not particularly limited as long as it is linked with the starting material A by a reaction other than a radical reaction. Examples of the starting material B are polyfunctional polyisocyanate compounds such as tolylene diisocyanate, hydrogenated tolylene diisocyanate, methylene diisocyanate and hexamethylene diisocyanate; organic aluminum compounds such as aluminum isopropoxide; and alkali earth metal oxide such as magnesium oxide.

The monomer 1 as a starting material of the molding compound A of the present invention is not limited as long as it is a monomer in liquid phase which is polymerizable by a radical polymerization reaction. The monomer 1 will be described in detail later.

The reaction compound is obtained by reacting the starting materials A and B in a known method. The starting materials A and B are suitably selected and combined depending on the use of moldings formed from the molding compound, required physical properties of the moldings and physical properties required in molding. Namely, the formulating composition and the amounts of the starting materials A and B used in the molding compound A are not particularly limited. In addition, the reaction conditions of the starting materials A and B are not particularly limited. Therefore, any compounds which are linked by a reaction other than a radical reaction can be used as the starting materials A and B. The starting materials A and B may have functional groups that are reacted by radical reaction, for example, a double bond.

When linking (i.e., thickening) the starting materials A and B by reaction, a thickening catalyst may be used. For example, a compound such as dibutyltin dilaurate can be used as the thickening catalyst. However, the thickening catalyst is not particularly limited to this compound. The amount of the thickening catalyst to be used is not particularly limited. By reacting the starting materials A and B, a reaction product having three-dimensional cross-linked structure is obtained.

It is possible to add to the above reaction compound the following materials. Various additives, synthetic resins such as polyethylene terephthalate (PET), and pieces of colored PET film. Examples of the additives are: fillers such as mica, colored mica, calcium carbonate, and aluminum hydroxide; coloring agents; internal mold release agents such as metallic soap, phosphate compound, and wax; reinforcing agents such as glass fibers, various synthetic fibers including polyester and aramide, and carbon fibers, all of these fibers having a length of about 1 mm to 6 mm; and thickeners such as metal oxides including magnesium oxide, and diisocyanate compound. For example, by adding a coloring agent to the reaction compound, the color tone and transparency of the resulting molding compound A can be suitably changed. Alternatively, by adding a filler to the reaction compound, it is possible to give transparency and fire retardant properties to the resulting molding compound A, reduce the shrinkage of the molding compound A when cured during molding, improve the surface hardness of the resulting molding, and prevent cracks. Thus, by adding the above-mentioned various additives to the reaction compound, it is possible to obtain the molding compound A having predetermined physical properties and desired markings developed thereon. In this case, the method for adding the additives is not particularly limited.

The coloring agent is not particularly limited, and organic and inorganic pigments which are generally used for the starting materials A and B (and starting materials C and D to be described later), i.e., the reaction compound, can be used. Preferable coloring agents are coloring agents which have excellent physical properties, for example, weather resistance, and do not cause vicious effects on the reaction of the starting materials A and B. The color of the coloring agent is not particularly limited, and the coloring agent may be suitably adjusted according to the color of the desired markings. By suitably adjusting the coloring agent according to the color of the desired markings, it is possible to produce various markings like, for example, some kinds of granite and marble, or mottled appearance. Moreover, in order to develop more complicated and delicate markings, various types of coloring agents of different color tones may be used together. When adding the coloring agents to the reaction compound (i.e., the mixture of the starting materials A and B), it is possible to evenly mix the coloring agents with the reaction compound, or unevenly mix the coloring agents with the reaction compound so as to produce a so-called streaked, or scrolled appearance. More specifically, when adding the coloring agents to the reaction compound, it is possible to perform agitation to such an extent that the coloring agent is completely mixed with the reaction compound or that the coloring agent is not completely mixed with the reaction compound.

The molding compound A of the present invention is prepared by mixing the starting materials A and B and the monomer 1, linking the starting materials A and B by a reaction other than a radical reaction to produce a reaction compound swelled by the monomer 1, and crushing the reaction compound into a predetermined size. The amount of the monomer 1 with respect to the reaction compound is not particularly limited as long as the reaction compound can sufficiently swell. Similarly, the method for mixing (adding) the starting materials A and B and the monomer 1 is not particularly limited. The crushing method is also not limited. The swelled reaction compound, i.e., composition, can be easily crushed by a predetermined method, for example, cutting with a so-called cutter knife. Since the molding compound A has suitable softness, if it is crushed, the crushed surface has an acute-angle shape.

In the following explanation, for the sake of convenience, the molding compound A thus obtained will be explained as molding particles so as to distinguish them from the molding compound A which is obtained by mixing the molding particles and the monomer 2 copolymerizable with the monomer 1. The particle diameter of the molding particles is not particularly limited. The range of the particle diameter is suitably set according to desired markings. The molding particles may be produced by crushing before being kneaded with the monomer 2, or by placing the monomer 2 and the swelled reaction compound (i.e., the composition) in a container equipped with, for example, a medium or low-seed agitator, a mixer such as a kneader, or a so-called rotational cutter, and by crushing the reaction compound by agitating the monomer 2 and the reaction compound.

It is preferable that, when the molding particles are mixed with, for example, the monomer 2, the molding particles have such viscosity and hardness that they can be easily crushed into a predetermined size and can retain the shapes of the crushed surfaces (i.e., they are not deformed even if an external pressure is applied). Although the preferred viscosity varies depending, for example, on the composition of the monomer 1, it is preferably not lower than 10,000 poise when measured with Helipath viscometer. Meanwhile, the hardness is preferably not higher than 100 HDD when measured with a durometer hardness tester of type D. Since the molding particles have suitable softness, they can be easily crushed with relatively small force. Moreover, since the molding particles have suitable viscosity, particles with diameters smaller than the desired particle diameter can hardly be generated by crushing. It is thus possible to improve the yield (i.e., a so-called crushing yield) when producing the particles.

The monomer 2 as a starting material of the molding compound A of the present invention is not particularly limited as long as it is a monomer copolymerizable with the monomer 1 or monomer 3 (to be described later), i.e., a monomer which is polymerized by a radical polymerization reaction. Conventional various monomers and their polymers are used as the monomers 1 and 2. Preferred examples are aromatic vinyl compounds, such as styrene and α-methyl styrene, and their polymers; unsaturated polyester; acrylic acid compounds such as (meth)acrylate, methyl methacrylate, isobutyl methacrylate, ethylene glycol di(meth)acrylate and trimethylolpropane tri(meth)acrylate, and their polymers; copolymers of aromatic vinyl compounds and acrylate compounds. Among these compounds, more preferred compounds are polyfunctional(meth)acrylates such as ethylene glycol di(meth)acrylate and trimethylolpropane tri(meth)acrylate because they have excellent reactivity.

It is also possible to use thermoplastic resins such as polyvinyl acetate and polybutadiene as the molding particles or a starting material of the molding compound A. By mixing a thermoplastic resin with the monomers 1 and 2, it is possible to reduce the shrinkage of the molding particles and the molding compound A when cured in molding, achieve a smoother surface of the resulting molding, and prevent cracks. Moreover, when the thermoplastic resin is used, it is preferable to add 5 weight parts to 30 weight parts thermoplastic resin with respect to 100 weight parts monomer 1 or 2. Adding the thermoplastic resin in an amount more than 30 weight parts is not preferred because it may lower the transparency, the heat resistance, and the water resistance of the resulting molding.

The molding compound A of the present invention is prepared by mixing the starting materials A and B and the monomer 1, linking the starting materials A and B by a reaction other than a radical reaction to produce a reaction compound swelled by the monomer 1, crushing the reaction compound into a predetermined size to produce molding particles (i.e., crushed material), and mixing the molding particles with the monomer 2. Here, the method for mixing the molding particles with the monomer 2 is not particularly limited.

In order to copolymerize the monomers 1 and 2, i.e., to mold a molding from the molding compound A, it is possible to use a curing agent (i.e., a polymerization initiator). Examples of the curing agent are organic peroxides, such as benzoyl peroxide, cyclohexanone peroxide, methyl ethyl ketone peroxide, t-butyl peroxybenzoate, t-butyl peroxyoctoate, t-butyl peroxypivalate,bis(4-t-butylcyclohexyl)peroxydicarbonate, diisopropyl peroxydicarbonate, 1,1-bis(t-butylperoxy)-3,3, 5-trimethyl cyclohexane, and 2, 4, 4-trimethylpentyl peroxyneodecanoate. However, the curing agent is not particularly limited to those compounds. It is preferable to use the curing agent in an amount ranging from 0.5 weight parts to 2.0 weight parts with respect to 100 weight parts monomers 1 and 2 in total. By copolymerizing the monomers 1 and 2, a molding having a three-dimensional cross-linked structure is obtained. The method for adding the curing agent is not particularly limited. For example, the curing agent may be added in advance to the monomer 1, i.e., the molding particles, or may be added to the monomer 2.

It is possible to add to the monomer 2 the following materials. Various additives, synthetic resins such as PET, and pieces of colored PET film. Examples of the additives are: fillers such as mica, colored mica, calcium carbonate, and aluminum hydroxide; coloring agents; internal mold release agents such as metallic soap, phosphate compound, and wax; reinforcing agents such as glass fibers, various synthetic fibers such as polyester and aramide, and carbon fibers, all of these fibers having a length of about 1 mm to 6 mm; thickeners such as metal oxides including magnesium oxide, and diisocyanate compound; and polymerization modifier such as β-mercapto octyl propionate. For example, by adding a coloring agent to the monomer 2, the color tone and transparency of the resulting molding can be suitably changed. Alternatively, by adding a filler to the monomer 2, it is possible to reduce the shrinkage when curing the molding compound A during molding, improve the surface hardness of the resulting molding, give transparency and fire retardant properties to the resulting molding, and prevent cracks. Thus, by adding the above-mentioned various additives to the monomer 2, it is possible to obtain the molding having predetermined physical properties and desired markings developed thereon. The method for adding the additives is not particularly limited. Additionally, the coloring agent is not particularly limited, and the above-mentioned coloring agents may be used.

The ratio of mixing (adding) the molding particles and the monomer 2 is not particularly limited, and can be suitably set according to, for example, a desired marking. A preferred amount of the molding particles is within a range from about 5 weight parts to 30 weight parts with respect to 100 weight parts monomer 2. In order to produce a more complicated and beautiful appearance, it is preferable to use various kinds of molding particles of different color tones together. Moreover, the method for mixing the molding particles and the monomer 2 is not particularly limited. For example, the molding particles and the monomer 2 may be mixed with a medium or low-seed agitator or a kneader. Since the molding particles have been sufficiently swelled, they can never absorb the monomer 2 when mixed with the monomer 2. It is thus possible to retain the viscosity of the monomer 2, i.e., the molding compound A, in a predetermined value, achieve improved workability in, for example, mixing, improve the dispersion of the molding particles, and prevent gathering of markings.

The molding of the present invention is formed by molding the molding particles. Alternatively, the molding is formed by molding the molding compound A. More specifically, the molding particles and the molding compound A can be easily made into a molding by molding them into a desired shape with the application of heat and pressure by known molding methods, such as compression molding and injection molding. For example, when the molding compound A is cured and molded, since a copolymerization reaction of the monomer 1 in the molding particles and the monomer 2 occurs, a higher adhesive strength is obtained at the boundary surface between the molding particles. Consequently, the resulting molding has improved physical properties, for example, mechanical strength. The molding method and the molding conditions of the molding particles and the molding compound A are not particularly limited. Moreover, the shape of the molding is not particularly limited.

Additionally, if further complicated markings are desired, the molding compound A may be crushed by a predetermined method, and used again as the molding particles. Namely, it is possible to mix again the molding compound A as the molding particles with another monomer 2. Since the molding particles (secondary particles) obtained by crushing the molding compound A have predetermined markings therein, when a molding, for example, an artificial stone is formed using such molding particles, the resulting artificial stone has more complicated and beautiful markings. A method for preparing a molding compound by making the molding compound A into the molding particles (the secondary particles) again will be described in detail later.

As described above, the molding particles of the present invention are produced by crushing into a predetermined size, the composition containing the reaction compound formed by reacting the starting material A with the starting material B by a reaction other than a radical reaction, and the monomer 1. Since the molding particles have suitable softness, they can be easily crushed with relatively small force. Moreover, since the molding particles have suitable viscosity, particles with diameters smaller than the desired particle diameter can hardly be generated by crushing. It is thus possible to improve a so-called crushing yield.

The method for preparing molding particles of the present invention, includes mixing the starting materials A and B and the monomer 1, linking the starting materials A and B by a reaction other than a radical reaction to produce a reaction compound, and crushing the reaction compound into a predetermined size. Moreover, the method for preparing the molding compound A of the present invention is a method including mixing the above-mentioned molding particles with the monomer 2. Since the molding particles have been sufficiently swelled, they can never absorb the monomer 2 even when mixed with the monomer 2. It is thus possible to retain the viscosity of the monomer 2, i.e., the molding compound A, in a predetermined value, achieve improved workability in, for example, mixing, improve the dispersion of the molding particles, and prevent gathering of markings. Furthermore, when the molding particles are mixed with, for example, the monomer 2, since the molding particles have such a viscosity and hardness that they can retain the shapes of the crushed surfaces, it is possible to develop desired markings.

In the molding compound A of the above-mentioned structure, the molding particles have a so-called streaked, or scrolled appearance. Namely, since the molding particles having such an appearance are used, the molding compound A of the above-mentioned structure can develop various markings. Therefore, by molding the above molding compound A, it is possible to easily produce a three-dimensional molding, for example, an artificial stone having an appearance resembling natural stones like granite and marble in a simplified manner. The molding compound A is applicable to various fields, and is particularly suitable for mass-production of artificial stones having desired markings developed thereon.

Furthermore, the molding of the present invention is constructed by molding the molding particles. When the molding particles are cured and molded, the monomer 1 in the molding particles causes a polymerization reaction, thereby improving the adhesive strength at the boundary surface between the molding particles. As a result, the resulting molding has excellent physical properties, such as mechanical strength.

Next, a method for preparing another molding compound of the present invention (hereinafter referred to as the molding compound B for the sake of convenience) will be discussed. The method for preparing the molding compound B of the present invention includes the steps of forming a reaction compound by linking the starting materials A and B by a reaction other than a radical reaction under the presence of the monomer 1, adding the reaction compound to the monomer 2, and crushing the reaction compound into a predetermined size. The method for preparing the molding compound by making the molding compound A into molding particles (secondary particles) again, i.e., the method for preparing the molding compound B of the present invention, includes the steps of forming a reaction compound by linking the starting materials A and B by a reaction other than a radical reaction under the presence of the monomer 1, adding a starting material C having a plurality of reactive substituent groups, a starting material D reactive with the starting material C, and a monomer 3 in liquid phase which is copolymerizable with the monomer 1 to the reaction compound, crushing the reaction compound into a predetermined size, repeating a process of forming a another reaction compound by linking the starting materials C and D by a reaction other than a radical reaction at least once, adding the another reaction compound to the monomer 2, and crushing the resulting reaction compound into predetermined size.

In the explanation below, for the sake of convenience, when the necessity of distinguishing the reaction compounds from each other arises, the reaction compound which is obtained by linking the starting materials A and B by a reaction other than a radical reaction will be referred to as a primary reaction compound, and the reaction compound (another reaction compound) which contains the primary reaction compound and is obtained by linking the starting materials C and D by a reaction other than a radical reaction will be referred to as a secondary reaction compound.

The starting material C which is used as a starting material in the method for preparing the molding compound B of the present invention is not particularly limited as long as it is a compound that is linked with the starting material D by a reaction other than a radical reaction. Examples of the starting material C are the polyhydric alcohols, polyhydric carboxylic acids and various polymers, exemplified as the starting material A above.

The starting materials A and C may be the same or different from each other. When repeating the process of forming another secondary reaction compound from the secondary reaction compound more than once, the same compound or different compounds may be used as the starting material C in the respective processes.

The starting material D used as a starting material in the method for preparing the molding compound B of the present invention is a so-called thickening compound, and is not particularly limited as long as it is linked with the starting material C by a reaction other than a radical reaction. Examples of the starting material D are the polyfunctional polyisocyanate compounds, organic aluminum compounds, alkaline earth metal oxides, exemplified as starting material B above.

The starting materials B and D may be the same or different from each other. When repeating the process of forming another secondary reaction compound from a secondary reaction compound more than once, the same compound or different compounds may be used as the starting material D in the respective processes.

The monomer 3 used as a starting material in the method for preparing the molding compound B of the present invention is not particularly limited as long as it is a monomer in liquid phase copolymerizable with the monomer 1. For example, various monomers exemplified as the monomers 1 and 2 above, and their polymers may be used as the monomer 3. Among these exemplified compounds, more preferred compounds are polyfunctional(meth)acrylates such as ethylene glycol di(meth)acrylate and trimethylolpropane tri(meth)acrylate because of their excellent reactivity.

The monomers 1, 2 and 3 may be the same or different from each other. When repeating the process of forming another secondary reaction compound from a secondary reaction compound more than once, the same compound or different compounds may be used as the monomer 3 in the respective processes.

It is also possible to use thermoplastic resins such as polyvinyl acetate and polybutadiene as a starting material of the molding compound B together with the monomers 1, 2 and 3. By mixing such a thermoplastic resin with the monomers 1, 2 and 3, it is possible to reduce the shrinkage of the molding compound B when cured in molding, achieve a smoother surface of the resulting molding, and prevent cracks. Moreover, when the thermoplastic resin is used, it is preferable to add 5 weight parts to 50 weight parts thermoplastic resin with respect to 100 weight parts monomer 1, 2 or 3. Adding the thermoplastic resin in an amount more than 50 weight parts is not desirable because it may lower the transparency, the heat resistance, and the moisture resistance of the resulting molding.

The primary reaction compound is obtained by reacting the starting materials A and B according to a known method. The secondary reaction compound is obtained by reacting the starting materials C and D according to a known method. Such starting materials A, B, C and D can be suitably combined depending, for example, on the use of a molding formed by molding the molding compound B, required physical properties of the molding, and physical properties required in molding. Namely, the formulating compositions and the amounts of the starting materials A and B to be the primary reaction compound in the molding compound B are not particularly limited. Similarly, the formulating compositions and the amounts of the starting materials C and D to be the secondary reaction compound in the molding compound B are not particularly limited. In addition, the reaction conditions of the starting materials A and B and of the starting materials C and D are not particularly limited. Therefore, any compounds which are linked by a reaction other than a radical reaction can be used as the starting materials A, B, C and D. The starting materials A, B, C and D may have a functional group capable of reacting radically, for example, a double bond.

When linking (i.e., thickening) the starting materials; A and B by a reaction and linking (i.e., thickening) the starting materials C and D by a reaction, a thickening catalyst may be used. For example, the above-exemplified compounds can be used as the thickening catalyst, but the thickening catalyst is not particularly limited to this compound. The amount of the thickening catalyst to be used is not particularly limited. By linking the starting materials A and B, the primary reaction compound having the three-dimensional cross-linked structure is obtained. Similarly, by linking the starting materials C and D, the secondary reaction compound having the three-dimensional cross-linked structure is obtained.

It is possible to add the above-exemplified various additives, or synthetic resins such as PET, and pieces of colored PET film to the primary reaction compound and/or the secondary reaction compound. By adding such additives or synthetic resins to the reaction compound, it is possible to produce the above-mentioned various effects.

The secondary reaction compound has predetermined markings derived from the primary reaction compound. Therefore, if a molding, for example, an artificial stone is formed from the molding compound B which is obtained by using the secondary reaction compound, the artificial stone can have a more complicated and beautiful appearance.

The amount of the monomer 1 with respect to the, primary reaction compound is not particularly limited as long as the primary reaction compound can sufficiently swell. Similarly, the amount of the monomer 3 with respect to the secondary reaction compound is not particularly limited as long as the secondary reaction compound can sufficiently swell. Additionally, the method for mixing (adding) the starting materials A and B and the monomer 1, and the method for mixing (adding) the primary reaction compound, starting materials C and D and the monomer 3 are not particularly limited.

The primary reaction compound is crushed into a predetermined size by, for example, placing the primary reaction compound together with the monomer 2 or 3 in a container equipped with a medium or low-seed agitator, a kneader, or a so-called rotational cutter, and by agitating the mixture. The secondary reaction compound is crushed into a predetermined size by, for example, placing the secondary reaction compound together with the monomer 2 or 3 in the container and by agitating the mixture. Since the reaction compound has suitable softness, if it is crushed, the crushed surface has an acute-angle shape. The particle diameter of the crushed reaction compound is not particularly limited. The range of the particle diameter is suitably set according to desired markings. Here, the method for adding the reaction compound to the monomer 2 or 3 is not particularly limited.

It is preferable that the reaction compound has such viscosity and hardness that it can be easily crushed into a predetermined size and can retain the shapes of the crushed surfaces (i.e., it is not deformed even if an external pressure is applied) when the reaction compound is added to the monomer 2 or 3. Although the preferred viscosity varies depending, for example, on the compositions of the monomers 1 and 3, it is preferably not lower than 10,000 poise when measured with Helipath viscometer. Meanwhile, the hardness is preferably lower than 100 HDD when measured with a durometer hardness tester of type D. Since the reaction compound has suitable softness, it can be easily crushed with relatively small force. Moreover, since the reaction compound has suitable viscosity, particles with diameters smaller than the desired particle diameter can hardly be generated by crushing.

Since the reaction compound has been sufficiently swelled, it can never absorb the monomer 2 or 3 even when added to the monomer 2 or 3. It is thus possible to retain the viscosity of the monomer 2 or 3 in a predetermined value, achieve improved workability in, for example, adding and mixing, improve the dispersion of the reaction compound, and prevent gathering of markings.

In order to copolymerize the monomers 1 and 2, or copolymerize the monomers 1, 2 and 3, i.e., to produce a molding by molding the molding compound B, it is possible to use a curing agent. The curing agent is not particularly limited, and the above-exemplified organic peroxides may be used. It is preferable to use the curing agent in an amount ranging from 0.5 weight parts to 2.0 weight parts with respect to 100 weight parts monomers 1 and 2 in total, or 100 weight parts monomers 1, 2 and 3 in total. By copolymerizing the monomers 1, 2 and 3, a molding having a three-dimensional cross-linked structure is obtained. The method for adding the curing agent is not particularly limited. For example, the curing agent may be added in advance to the monomer 1 or 3, i.e., the reaction compound, or may be added to the monomer 2.

It is also possible to add the above-exemplified various additives and synthetic resins to the monomer 2. By adding such additives and synthetic resins to the monomer 2, the above-mentioned various effects can be produced.

The ratio of mixing (adding) the reaction compound and the monomer 2 is not particularly limited, and can be suitably set depending, for example, on desired markings. A preferred amount of the reaction compound with respect to 100 weight parts monomer 2 is within a range from about 5 weight parts to 500 weight parts. In order to develop more complicated and beautiful markings, it is preferable to use various kinds of reaction compounds of different color tones together.

A molding is obtained by molding the molding compound B prepared by the method of the present invention. Namely, the molding compound B can be easily made into a molding by molding it into a desired shape with the application of heat and pressure by known molding methods, for example, compression molding and injection molding. When the molding compound B is cured and molded, since a copolymerization reaction of the monomers 1, 2 and 3 occurs, a higher adhesive strength is obtained at the boundary surface between the reaction compound and the monomer 2. Consequently, the resulting molding has improved physical properties, for example, mechanical strength. In this case, the molding method and the molding conditions of the molding compound B are not particularly limited. Moreover, the shape of the molding is not particularly limited.

The method for preparing the molding compound B of the present invention is a method including the steps of forming the primary reaction compound by linking the starting materials A and B by a reaction other than a radical reaction under the presence of the monomer 1, adding the primary reaction compound to the monomer 2 copolymerizable with the monomer 1, and crushing the primary reaction compound into a predetermined size. The method for preparing the molding compound B of the present invention is also a method including the steps of adding the starting materials C and D and the monomer 3 to the primary reaction compound, crushing the primary reaction compound into a predetermined size, repeating the process of forming the secondary reaction compound by linking the starting materials C and D by a reaction other than a radical reaction at least once, adding the secondary reaction compound to the monomer 2 copolymerizable with the monomers 1 and 3, and crushing the secondary reaction compound into a predetermined size. Since the reaction compound has suitable softness, it can be easily crushed with a relatively small force. Moreover, since the reaction compound has suitable viscosity, particles with diameters smaller than the desired particle diameter can hardly be generated by crushing.

Since the reaction compound has been sufficiently swelled, it can never absorb the monomer 2 or 3 even when added to the monomer 2 or 3. It is thus possible to retain the viscosity of the monomer 2 or 3 in a predetermined value, achieve improved workability in, for example, adding and mixing, improve the dispersion of the reaction compound, and prevent gathering of markings. In addition, since the reaction compound has such viscosity and hardness that it can retain the shape of the crushed surface when the reaction compound is added to the monomer 2 or 3, it is possible to develop desired markings. Therefore, for example, the molding compound B prepared by the above-mentioned method (i.e., the method including the step of forming the secondary reaction compound), has a so-called streaked, or scrolled markings therein. More specifically, since the primary reaction compound having markings therein is used, the molding compound B with the above-mentioned structure can develop various markings. Accordingly, by molding the molding compound B obtained by the above-mentioned method, it is possible to easily produce a three-dimensional molding, for example, an artificial stone having an appearance resembling natural stones like granite and marble in a simplified manner. Moreover, when the molding compound B is cured and molded, since a copolymerization reaction of the monomers 1, 2 and 3 occurs, a higher adhesive strength is obtained at the boundary surface between the reaction compound and the monomer 2. Consequently, the resulting molding has improved physical properties, for example, mechanical strength. The molding compound B obtained by the above-mentioned method is applicable to various fields, and is particularly suitable for mass-production of moldings, for example, artificial stones having desired markings developed thereon.

The present invention will be discussed in more detail with reference to the following examples and comparable examples. However, the present invention is not limited to those examples and comparable examples. The term "parts" described in the following examples and comparable examples means "parts by weight".

### [Example 1]

A syrup was prepared by mixing 70.9 parts methyl methacrylate as the monomer 1 and 25 parts styrene-2-hydroxyethyl methacrylate copolymer (LMSH200 (trade name) made by Sekisui Chemical Co., Ltd.) as the starting material A. 4.1 parts hexamethylene diisocyanate trimer (Coronate HX (trade name) made by Nippon Polyurethane Industry, Co., Ltd.) as the starting material B, 0.01 parts dibutyltin dilaurate as a thickening catalyst, 0.5 parts 1,1-bis(t-butylperoxy)-3,3,5-trimethylcyclohexane(Perhexa 3M (trade name) made by Nippon Oil & Fats Co., Ltd.) as a curing agent, and 160 parts aluminum hydroxide (CW-325B (trade name) made by Sumitomo Chemical Co., Ltd.) as a filler, were added to the syrup, and mixed by agitation using a mixer to produce a mixture.

Subsequently, the mixture was separated into three equal parts, and different coloring agents (made by Dainichiseika Color & Chemicals MFG. Co., Ltd.) were added to the parts of the mixture, respectively. More specifically, by adding 1.0 part white toner (AT-3 (trade name)) as a coloring agent to the first mixture part and performing agitation, the mixture part was colored in white. Similarly, the second mixture part was colored in black by adding 1.8 parts black toner (AT-256 (trade name)) as a coloring agent to the second mixture part. The third mixture part was colored in brown by adding 0.8 parts brown toner (AT-96 (trade name)) as a coloring agent to the third mixture part. Then, bubbles contained in the mixture parts were degassed under reduced pressure by a predetermined method.

Thereafter, the mixture parts were mixed to such an extent that their colors were not completely mixed, poured into a mold with a predetermined shape, and heated for 30 minutes at 60 °C. As a result, the styrene-2-hydroxyethyl methacrylate copolymer was thickened by the hexamethylene diisocyanate trimer, and a reaction compound having desired markings developed by the three colors, i.e., a rubber-like reaction compound (composition) swelled by the methyl methacrylate, was obtained. The hardness (HDA) of the reaction compound measured with a durometer hardness tester of type A was 25.

By cutting the reaction compound with a so-called cutter knife and classifying them, molding particles with a particle diameter ranging from 4 mm to 0.15 mm were obtained. The molding particles thus obtained had a so-called streaked, or scrolled appearance.

### [Example 2]

A syrup was prepared as the monomer 2 by mixing 30 parts polymethyl methacrylate, 70 parts methyl methacrylate, and 3.0 parts ethylene glycol dimethacrylate (Light Ester EG (trade name) made by Kyoeisha Chemical Co., Ltd.). 0.5 parts β-mercapto octyl propionate (β-MPA-2EH (trade name) made by Yodo Chemical's Co., Ltd.) as a polymerization regulator, 130 parts aluminum hydroxide (CW-325LV (trade name) made by Sumitomo Chemical Co., Ltd.) as a filler, and 100 parts molding particles obtained in Example 1 were added to the syrup. By agitating and mixing these compounds, a mixture was prepared.

Next, 0.3 parts 2,4,4-trimethylpentyl peroxyneodecanate (Trigonox 151 (trade name) made by Kayaku Akzo Corporation) was added to the mixture. After agitating and mixing the resulting mixture, bubbles contained in the mixture were degassed under reduced pressure by a predetermined method. As a result, a molding compound (the molding compound A) having markings something like that of granite was obtained.

Subsequently, the molding compound was poured into a mold with a predetermined shape, and cured for two hours at 60 °C and further cured for one hour at 120 °C. As a result, a 13-mm thick molding having an appearance suggestive of granite was obtained. Thereafter, the surface of the molding was rubbed with sandpaper of a predetermined fineness. Consequently, an artificial stone with an elaborate design and an appearance resembling granite was obtained.

### [Example 3]

A mixture was prepared by performing agitation and mixing in the same manner as in Example 1. Subsequently, the mixture was separated into two equal parts, and different coloring agents (made by Dainichiseika Kogyo, Co., Ltd.) were added to the parts of the mixture, respectively. More specifically, by adding 1.0 part white toner (AT-3 (trade name)) as a coloring agent to the one of the mixture parts, the mixture part was colored in white. Similarly, the other mixture part was colored in black by adding 0.6 parts black toner (AT-256 (trade name)) as a coloring agent thereto. Then, bubbles contained in the mixture parts were degassed under reduced pressure by a predetermined method.

Thereafter, the mixture parts were poured into separate molds with a predetermined shape, respectively, and heated for 30 minutes at 60 °C. As a result, white, and black rubber-like reaction compounds (compositions) were obtained. The hardness (HDA) of the respective reaction compounds was measured with a durometer hardness tester of type A. The hardness of each of the reaction compounds was 35. By cutting the respective reaction compounds with a so-called cutter knife and classifying them, molding particles with a particle diameter ranging from 4 mm to 0.15 mm were obtained.

### [Example 4]

The same processes as those in Example 2 were performed by using 100 parts white and black molding particles prepared in Example 3 in total, instead of 100 parts molding particles of Example 1. As a result, a 13-mm thick molding having an appearance suggestive of granite was obtained. Thereafter, the surface of the molding was rubbed with sandpaper of a predetermined fineness. Consequently, an artificial stone with an elaborate design and an appearance resembling granite was obtained.

### [Example 5]

A mixture was prepared by adding 1.0 part magnesium oxide as the starting material B, 0.5 parts 1,1-bis(t-butylperoxy)-3,3,5-trimethyl cyclohexane as a curing agent, and 160 parts aluminum hydroxide (CW-325LV (trade name) made by Sumitomo Chemical Co., Ltd.) as a filler to 100 parts methacrylate-methyl methacrylate partial copolymer as the starting material A, and by agitating and mixing them with a mixer.

Subsequently, the mixture was separated into two equal parts. By adding 1.0 part white toner (AT-3 (trade name)) as a coloring agent to the one of the mixture parts, the mixture part was colored in white. Similarly, the other mixture part was colored in black by adding 0.6 parts black toner (AT-256 (trade name)) as a coloring agent thereto. Then, bubbles contained in the mixture parts were degassed under reduced pressure by a predetermined method. Both of the mixture parts had a viscosity of 45 poise.

Thereafter, the mixture parts were poured into separate molds with a predetermined shape, respectively, and thickened by leaving them for 17 hours at 23 °C. As a result, white, and black rubber-like reaction compounds (compositions) were obtained. Both of the respective reaction compounds had a viscosity of 740,000 poise, and the surfaces thereof were not sticky. These reaction compounds were swelled by the methacrylate-methyl methacrylate partial copolymer (the monomer 1) which was not thickened.

### [Example 6]

A syrup was prepared as the monomer 2 by mixing 30 parts polymethyl methacrylate, 70 parts methyl methacrylate and 3.0 parts ethylene glycol dimethacrylate. Subsequently, the syrup, 0.5 parts β-mercapto octyl propionate as a polymerization regulator, 130 parts aluminum hydroxide (CW-325LV (trade name) made by Sumitomo Chemical Co., Ltd.) as a filler, and 50 parts white and black reaction compounds obtained in Example 5 in total, were introduced into a container equipped with a so-called rotational cutter. By agitating these mixture and cutting the reaction compounds with the rotational cutter, molding particles were produced.

Next, 0.3 parts 2,4,4-trimethylpentyl peroxyneodecanate as a curing agent was further added to the mixture. After agitating and mixing the resulting mixture, bubbles contained in the mixture were degassed under reduced pressure by a predetermined method. As a result, a molding compound (the molding compound A) having markings something like that of granite was obtained.

Subsequently, the molding compound was poured into a mold with a predetermined shape, and cured for two hours at 60 °C and further cured for one hour at 120 °C. As a result, a 13-mm thick molding having an appearance suggestive of granite was obtained. Thereafter, the surface of the molding was rubbed with sandpaper of a predetermined fineness. Consequently, an artificial stone with an elaborate design and an appearance resembling granite was obtained.

### [Example 7]

A mixture was prepared by performing agitation and mixing in the same manner as in Example 1. Subsequently, the mixture was separated into three equal parts. By adding 1.0 part white toner (AT-3 (trade name)) as a coloring agent to a first mixture part, the mixture part was colored in white. Similarly, a second mixture part was colored in yellow by adding 1.0 part yellow toner (AT-509 (trade name)) as a coloring agent to the second mixture part. A third mixture part was colored in black by adding 1.8 parts black toner (AT-256 (trade name)) as a coloring agent to the third mixture part. Then, bubbles contained in the mixture parts were degassed under reduced pressure by a predetermined method.

Thereafter, the mixture parts were mixed to such an extent that their colors were not completely mixed. The resulting mixture was poured into a mold with a predetermined shape, and heated for 30 minutes at 60 °C. As a result, a rubber-like reaction compound (composition) having desired markings developed by the three colors was obtained. The hardness (HDA) of the reaction compound measured with a durometer hardness tester of type A was 25.

250 grams of the reaction compound was cut by a rotational cutter with a blade length of 25 mm (TM-800 (trade name) manufactured by Tescom Co., Ltd.) by rotating the blade for eight seconds at a speed of 1,000 rpm. Subsequently, by classifying the cut pieces of the reaction compound, molding particles with a particle diameter ranging from 4 mm to 0.15 mm were obtained. The molding particles thus obtained had a so-called streaked, or scrolled appearance.

### [Example 8]

The same processes as those in Example 2 were performed by using 50 parts molding particles prepared in Example 7 instead of 100 parts molding particles of Example 1. As a result, a 13-mm thick molding having an appearance suggestive of granite was obtained.

Various physical properties of the molding were measured by predetermined methods. According to the results, the flexural strength was 7.3 kgf/mm², the flexural modules was 820 kgf/mm², Izod impact strength was 3.8 kgf•cm/cm, and Barcol 934-1 hardness was 65. The surface of the molding was rubbed with sandpaper of a predetermined fineness. Consequently, an artificial stone with an elaborate design and an appearance resembling granite was obtained.

### [Example 9]

The molding particles obtained in Example 7 were molded with the application of heat and pressure. More specifically, a mold was packed with 500 grams of the molding particles, and press molding was performed for ten minutes under conditions wherein the upper mold temperature was 120 °C, the lower mold temperature was 125 °C, and the pressure was 37 ton. As a result, a molding with a length of 220 mm, a width of 24 mm, and a thickness of 7 mm was obtained. The molding had such beautiful markings that any natural stones can never have on a surface thereof without any cracks or warpage.

### [Comparable Example 1]

A mixture was prepared as follows. 3.0 parts ethylene glycol dimethacrylate, 160 parts aluminum hydroxide, and 0.3 parts 2,4,4-trimethylpentyl peroxyneodecanate were added to 100 parts methyl methacrylate partial polymer. After agitating and mixing the resulting mixture, bubbles contained in the mixture were degassed under reduced pressure by a predetermined method.

Subsequently, the mixture was poured into a mold with a predetermined shape, and cured for two hours at 60 °C and further cured for one hour at 120 °C. As a result, a 13-mm thick cured product was obtained. Barcol 934-1 hardness of the cured product was 64. The cured product was roughly crushed with a jaw crusher, and then finely crushed with a roll mill. By classifying the crushed cured product, 20-mesh to 80-mesh molding particles were prepared for comparison purposes. The crushing yield of the comparable molding particles was as low as 66 %, and a large amount of resin particles which were crushed to a size smaller than 80 mesh were generated.

Next, 30 parts polymethyl methacrylate, 70 parts methyl methacrylate, and 3.0 parts ethylene glycol dimethacrylate were mixed to produce a syrup. Subsequently, 0.5 parts β-mercapto octyl propionate, 130 parts aluminum hydroxide, 0.3 parts 2,4,4-trimethylpentyl peroxyneodecanate, and 40 parts comparable molding particles mentioned above were added to the syrup. After agitating and mixing the mixture, the mixture were degassed under reduced pressure by a predetermined method. As a result, a comparable molding compound was obtained.

Thereafter, the comparable molding compound was poured into a mold with a predetermined shape, and cured for two hours at 60 °C and further cured for one hour at 120 °C. As a result, a 13-mm thick comparable molding was produced.

Various physical properties of the comparable molding were measured by predetermined methods. According to the results, the flexural strength was 6.0 kgf/mm², flexural modules was 820 kgf/mm², Izod impact strength was 2.5 kgf•cm/cm, and Barcol 934-1 hardness was 65. It was found from these figures that the comparable molding had inferior physical properties, for example, mechanical strength compared to the molding of Example 8.

### [Example 10]

By performing the same processes as in Example 1, a primary reaction compound which was obtained by thickening the styrene-2-hydroxyethyl methacrylate copolymer by the hexamethylene diisocyanate trimer and had a so-called streaked, or scrolled appearance developed by three colors (white, black and brown), i.e., rubber-like primary reaction compound swelled by the methyl methacrylate, was produced. The hardness (HDA) of the primary reaction compound measured with a durometer hardness tester of type A was 25.

Next, 70.9 parts methyl methacrylate as the monomer 3 and 25 parts styrene-2-hydroxyethyl methacrylate copolymer (LMSH200 (trade name) made by Sekisui Chemical Co., Ltd.) as the starting material C were mixed to produce a syrup. Then, the syrup, 50 parts primary reaction compound mentioned above, 4.1 parts hexamethylene diisocyanate trimer (Coronate HX (trade name) made by Nippon Polyurethane Kogyo, Co., Ltd.) as the starting material D, 0.01 parts dibutyltin dilaurate as a thickening catalyst, 0.5 parts 1,1-bis(t-butylperoxy)-3,3,5-trimethylcyclohexane (Perhexa 3M (trade name) made by Nippon Oil & Fats Co., Ltd.) as a curing agent, and 130 parts aluminum hydroxide (CW-325B (trade name) made by Sumitomo Chemical Co., Ltd.) as a filler, were placed into a container equipped with the rotational cutter with a blade length of 25 mm (TM-800 (trade name) manufactured by Tescom Co., Ltd.). By agitating the mixture and rotating the blade of the rotational cutter for ten seconds at a speed of 1,000 rpm, the primary reaction compound was crushed.

Thereafter, bubbles contained in the mixture were degassed under reduced pressure by a predetermined method. Subsequently, the mixture was poured into a mold with a predetermined shape, and heated for 30 minutes at 60 °C. As a result, a rubber-like secondary reaction compound having a so-called mottled appearance developed by the primary reaction compound was obtained.

Next, a syrup was prepared as the monomer 2 by mixing 30 parts polymethyl methacrylate, 70 parts methyl methacrylate, and 3.0 parts ethylene glycol dimethacrylate (Light Ester EG (trade name) made by Kyoeisha Chemical Co., Ltd.). The syrup, 100 parts secondary reaction compound mentioned above, 0.5 parts β-mercapto octyl propionate (β-MPA-2EH (trade name) made by Yodo Chemical's Co., Ltd.) as a polymerization regulator, 130 parts aluminum hydroxide (CW-325LV (trade name) made by Sumitomo Chemical Co., Ltd.) as a filler, and 0.3 parts 2,4,4-trimethylpentyl peroxyneodecanate (Trigonox 151 (trade name) made by Kayaku Akzo Corporation), were placed into the above-mentioned container equipped with the rotational cutter. By agitating the mixture and rotating the blade of the rotational cutter for ten seconds at a speed of 1,000 rpm, the secondary reaction compound was crushed.

Subsequently, bubbles contained in the mixture were degassed under reduced pressure by a predetermined method. As a result, a molding compound (molding compound B) having markings something like that of granite was obtained.

Thereafter, the molding compound was poured into a mold with a predetermined shape, and cured for two hours at 60 °C and further cured for one hour at 120 °C. As a result, a 13-mm thick molding having an appearance suggestive of granite was obtained. Next, the surface of the molding was rubbed with sandpaper of a predetermined fineness. Consequently, an artificial stone with an elaborate design and an appearance resembling granite was obtained.

In the artificial stone, as shown in Fig. 1, the crushed secondary reaction compound pieces 2 were dispersed in a compound 3 composed of a hardened material of the monomer 2, and a so-called mottled appearance was developed by the secondary reaction compound pieces 2. In the secondary reaction compound pieces 2, the crushed primary reaction compound pieces 1 were suitably dispersed, and a mottled appearance was given by the primary reaction compound pieces 1.

### [Example 11]

By performing the same processes as those in Example 5, white, and black rubber-like primary reaction compounds were produced. Both of the primary reaction compounds had a viscosity of 740,000 poise, and the surfaces thereof were not sticky. These primary reaction compounds were swelled by the methacrylate-methyl methacrylate partial copolymer (monomer 1) which was not thickened.

Next, a syrup was prepared as the monomer 2 by mixing 30 parts polymethyl methacrylate, 70 parts methyl methacrylate, and 3.0 parts ethylene glycol dimethacrylate. The syrup, 50 parts primary reaction compound mentioned above, 0.5 parts β-mercapto octyl propionate as a polymerization regulator, and 130 parts aluminum hydroxide (CW-325LV (trade name) made by Sumitomo Chemical Co., Ltd.) as a filler, were placed into the above-mentioned container equipped with the rotational cutter. Subsequently, by agitating the mixture, the primary reaction compound was cut by the rotational cutter.

Thereafter, 0.3 parts 2,4,4-trimethylpentyl peroxyneodecanate as a curing agent was further added to the mixture. After agitating and mixing the mixture, bubbles contained in the mixture were degassed under reduced pressure by a predetermined method. As a result, a molding compound (molding compound B) having markings something like that of granite was obtained.

Then, the molding compound was poured into a mold with a predetermined shape, and cured for two hours at 60 °C and further cured for one hour at 120 °C. As a result, a 13-mm thick molding having an appearance suggestive of granite was obtained. Next, the surface of the molding was rubbed with sandpaper of a predetermined fineness. Consequently, an artificial stone with an elaborate design and an appearance resembling granite was obtained.

As is clear from the results of Examples 1 to 11 and Comparable Example 1, since the reaction compounds have suitable softness, they can be easily crushed with relatively small force. Moreover, since the resulting molding particles (or reaction compound) have suitable viscosity, particles with a diameter smaller than the desired particle diameter can hardly be generated by crushing. It is thus possible to improve a so-called crushing yield. Furthermore, by molding the molding compound prepared by the method of the present embodiment, it is possible to easily produce a molding such as an artificial stone having excellent physical properties, for example, mechanical strength, and an appearance resembling a natural stone in a simplified manner. Namely, the molding particles and the molding compound of the present embodiment are suitable for the production of moldings with desired markings developed thereon.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A molding compound prepared by crushing into a predetermined size, a composition containing a reaction compound which is formed by linking a starting material A having a plurality of reactive substituent groups, with a starting material B reactive with said starting material A by a reaction other than a radical reaction, and a monomer 1 in liquid phase which is polymerizable by a radical polymerization reaction,
the molding compound being **characterized in that**:
the starting material A is a compound having a plurality of reactive substituent groups which is selected from the group consisting of hydroxyl groups and carboxyl groups, the starting material B is at least one compound selected from the group consisting of polyfunctional polyisocyanate compounds, organic aluminum compounds, and alkaline earth metal oxides, and at least one of the starting materials A and B includes a compound having more than two functional groups;
the reaction compound is produced by three-dimensionally crosslinking the starting materials A and B by a reaction other than a radical reaction between the reactive substituent groups and the starting material B; and
the composition is produced by swelling the reaction compound by contact with the monomer 1 in liquid phase that can be polymerized by a radical polymerization reaction.

2. The molding compound set forth in claim 1, wherein a shape of a fragmented surface of the composition is retained.

3. The molding compound set forth in claim 1 or 2, wherein the reaction between the reactive substituent groups and the starting material B is one of a reaction between polyfunctional polyisocyanate compounds and hydroxyl groups or carboxyl groups and a reaction between carboxyl groups and organic aluminum compounds or alkaline earth metal oxides.

4. The molding compound set forth in any of claims 1, 2, and 3, wherein a viscosity of the reaction compound is not less than 10,000 poise when measured with a Helipath viscometer.

5. The molding compound set forth in any one of claims 1, 2, 3, and 4, wherein, a hardness of the reaction compound is not higher than 100 HDD when measured with a durometer hardness tester of type D.

6. A method for preparing a molding compound, comprising the steps of:
mixing a starting material A having a plurality of reactive substituent groups, a starting material B reactive with the starting material A, and a monomer 1 in liquid phase which is polymerizable by a radical polymerization reaction:
forming a reaction compound by linking the starting materials A and B by a reaction other than a radical reaction after the mixing step: and
crushing the reaction compound into a predetermined size,
the method being **characterized in that**:
the starting material A is a compound having a plurality of reactive substituent groups which is selected from the group consisting of hydroxyl groups and carboxyl groups, the starting material B is at least one compound selected from the group consisting of polyfunctional polyisocyanate compounds, organic aluminum compounds, and alkaline earth metal oxides, and at least one of the starting materials A and B includes a compound having more than two functional groups;
the reaction compound is produced by three-dimensionally crosslinking the starting materials A and B by a reaction other than a radical reaction between the reactive substituent groups and the starting material B; and
the reaction compound is produced by swelling by the liquid-phase monomer 1 that can be polymerized by a radical polymerization reaction.

7. The method for preparing a molding compound set forth in claim 6, wherein the reaction between the reactive substituent groups and the starting material B is one of a reaction between polyfunctional polyisocyanate compounds and hydroxyl groups or carboxyl groups and a reaction between carboxyl groups and organic aluminum compounds or alkaline earth metal oxides.

8. The method for preparing a molding compound set forth in claim 6 or 7, wherein a viscosity of the reaction compound is not lower than 10,000 poise when measured with a Helipath viscometer.

9. The method for preparing a molding compound set forth in any one of claims 6, 7, and 8, wherein a hardness of the reaction compound is not higher than 100 HDD when measured with a type D durometer hardness tester.

10. A method for preparing a molding compound, comprising the steps of:
forming a reaction compound by linking a starting material A having a plurality of reactive substituent groups with a starting material B reactive with the starting material A by a reaction other than a radical reaction under the presence of a monomer 1 in liquid phase which is polymerizable by a radical polymerization reaction;
adding the reaction compound to a monomer 2 copolymerizable with the monomer 1; and
crushing the reaction compound into a predetermined size after the adding step,
the method being **characterized in that**:
the starting material A is a compound having a plurality of reactive substituent groups which is selected from the group consisting of hydroxyl groups and carboxyl groups, the starting material B is at least one compound selected from the group consisting of polyfunctional polyisocyanate compounds, organic aluminum compounds, and alkaline earth metal oxides, and at least one of the starting materials A and B includes a compound having more than two functional groups;
the reaction compound is produced by three-dimensionally crosslinking the starting materials A and B by a reaction other than a radical reaction between the reactive substituent groups and the starting material B; and
the reaction compound is produced by swelling by contact with the liquid-phase monomer 1 that can be polymerized by a radical polymerization reaction.

11. The method for preparing a molding compound set forth in claim 10, wherein the reaction between the reactive substituent groups and the starting material B is one of a reaction between polyfunctional polyisocyanate compounds and hydroxyl groups or carboxyl groups and a reaction between carboxyl groups and organic aluminum compounds or alkaline earth metal oxides.

12. The method for preparing a molding compound set forth in claim 10 or 11, wherein a viscosity of the reaction compound is not lower than 10,000 poise when measured with a Helipath viscometer.

13. The method for preparing a molding compound set forth in any one of claims 10, 11, and 12, wherein a hardness of the reaction compound is lower than 100 HDD when measured with a type D durometer hardness tester.

14. A method for preparing a molding compound, comprising the steps of:
forming a primary reaction compound by linking a starting material A having a plurality of reactive substituent groups with a starting material B reactive with the starting material A by a reaction other than a radical reaction under the presence of a monomer 1 in liquid phase which is polymerizable by a radical polymerization reaction:
forming a secondary reaction compound by adding a starting material C having a plurality of reactive substituent groups, a starting material D reactive with the starting material C and a monomer 3 in liquid phase copolymerizable with the monomer 1 to the primary reaction compound, crushing the resulting primary reaction compound into a predetermined size, and linking the starting materials C and D by a reaction other than a radical reaction;
adding the secondary reaction compound to a monomer 2 copolymerizable with the monomers 1 and 3; and
crushing the secondary reaction compound into a predetermined size after the adding step,
the method being **characterized in that**:
the starting materials A and C are compounds each having a plurality of reactive substituent groups which is selected from the group consisting of hydroxyl groups and carboxyl groups, each of the starting materials B and D is at least one compound selected from the group consisting of polyfunctional polyisocyanate compounds, organic aluminum compounds, and alkaline earth metal oxides, at least one of the starting materials A and B includes a compound having more than two functional groups, and at least one of the starting materials C and D includes a compound having more than two functional groups;
the primary reaction compound is produced by three-dimensionally crosslinking the starting materials A and B by a reaction other than a radical reaction between the reactive substituent groups and the starting material B;
the secondary reaction compound is produced by three-dimensionally crosslinking the starting materials C and D by a reaction other than a radical reaction between the reactive substituent groups and the starting material D; and
the primary and secondary reaction compounds are each produced by swelling by contact with the liquid-phase monomers 1, 2, and 3 that can be polymerized by a radical polymerization reaction.

15. The method for preparing a molding compound set forth in claim 14, wherein the reaction between the reactive substituent groups and the starting material B is one of a reaction between polyfunctional polyisocyanate compounds and hydroxyl groups or carboxyl groups and a reaction between carboxyl groups and organic aluminum compounds or alkaline earth metal oxides.

16. The method for preparing a molding compound set forth in claim 14 or 15, wherein a viscosity of the primary reaction compound and the secondary reaction compound is not lower than 10,000 poise when measured with a Helipath viscometer.

17. The method for preparing a molding compound set forth in any one of claims 14, 15, and 16, wherein a hardness of the primary reaction compound and the secondary reaction compound is lower than 100 HDD when measured with a type D durometer hardness tester.

18. A molding produced by molding a molding compound prepared by crushing into a predetermined size, a composition containing a reaction compound which is formed by linking a starting material A having a plurality of reactive substituent groups, with a starting material B reactive with the starting material A by a reaction other than a radical reaction, and a monomer 1 in liquid phase which is polymerizable by a radical polymerization reaction,
the molding being **characterized in that**:
the starting material A is a compound having a plurality of reactive substituent groups which is selected from the group consisting of hydroxyl groups and carboxyl groups, the starting material B is at least one compound selected from the group consisting of polyfunctional polyisocyanate compounds, organic aluminum compounds, and alkaline earth metal oxides, and at least one of the starting materials A and B includes a compound having more than two functional groups;
the reaction compound is produced by three-dimensionally crosslinking the starting materials A and B by a reaction other than a radical reaction between the reactive substituent groups and the starting material B; and
the composition is produced by swelling the reaction compound by contact with the liquid-phase monomer 1 that can be polymerized by a radical polymerization reaction.

## Patentansprüche

1. Formmasse, hergestellt durch Zerkleinern einer Zusammensetzung auf eine vorbestimmte Größe, enthaltend eine Reaktionsverbindung, die durch Vernetzung eines Ausgangsmaterials A mit einer Vielzahl von reaktiven Substituentengruppen mit einem Ausgangsmaterial B, das mit dem Ausgangsmaterial A durch eine andere Reaktion als eine radikalische Reaktion reaktiv ist, sowie ein Monomer 1 in flüssiger Phase, das durch radikalische Polymerisationsreaktion polymerisierbar ist, gebildet wird,
wobei die Formmasse **dadurch** charakterisiert ist, dass:
das Ausgangsmaterial A eine Verbindung mit einer Vielzahl von reaktiven Substituentengruppen ist, die ausgewählt sind aus der Gruppe, bestehend aus Hydroxylgruppen und Carboxylgruppen, das Ausgangsmaterial B mindestens eine Verbindung darstellt, ausgewählt aus der Gruppe, bestehend aus polyfunktionellen Polyisocyanatverbindungen, organischen Aluminiumverbindungen und Erdalkalimetalloxiden, und mindestens eines der Ausgangsmaterialien A und B eine Verbindung mit mehr als zwei funktionellen Gruppen umfasst;
die Reaktionsverbindung hergestellt wird durch dreidimensionales Vernetzen der Ausgangsmaterialien A und B durch eine andere Reaktion als eine radikalische Reaktion zwischen den reaktiven Substituentengruppen und dem Ausgangsmaterial B, und
die Zusammensetzung hergestellt wird durch Quellen lassen der Reaktionsverbindung durch Kontakt mit dem Monomer 1 in flüssiger Phase, das durch radikalische Polymerisationsreaktion polymerisiert werden kann.

2. Formmasse nach Anspruch 1, worin eine Form einer fragmentierten Oberfläche der Zusammensetzung beibehalten wird.

3. Formmasse nach Anspruch 1 oder 2, worin die Reaktion zwischen den reaktiven Substituentengruppen und dem Ausgangsmaterial B eine der Reaktionen ist zwischen polyfunktionellen Polyisocyanatverbindungen und Hydroxylgruppen oder Carboxylgruppen und zwischen Carboxylgruppen und organischen Aluminiumverbindungen oder Erdalkalimetalloxiden.

4. Formmasse nach irgendeinem der Ansprüche 1, 2 und 3, worin die Viskosität der Reaktionsverbindung nicht weniger als 10.000 Poise beträgt, wenn gemessen mit einem Helipath-Viskosimeter.

5. Formmasse nach irgendeinem der Ansprüche 1, 2, 3 und 4, worin die Härte der Reaktionsverbindung nicht höher als 100 HDD beträgt, wenn gemessen mit einem Durometer-Härtetester vom Typ D.

6. Verfahren zur Herstellung einer Formmasse, umfassend die Schritte:
Mischen eines Ausgangsmaterials A mit einer Vielzahl von reaktiven Substituentengruppen, einem Ausgangsmaterial B, das mit dem Ausgangsmaterial A reaktiv ist, und einem Monomer 1 in flüssiger Phase, das durch eine radikalische Polymerisationsreaktion polymerisierbar ist;
Bilden einer Reaktionsverbindung durch Verknüpfen der Ausgangsmaterialien A und B mit einer anderen Reaktion als einer radikalischen Reaktion nach dem Mischungsschritt und
Zerkleinern der Reaktionsverbindung auf eine vorbestimmte Größe,
wobei das Verfahren **dadurch gekennzeichnet ist, dass**:
das Ausgangsmaterial A eine Verbindung mit einer Vielzahl von reaktiven Substituentengruppen ist, die ausgewählt sind aus der Gruppe, bestehend aus Hydroxylgruppen und Carboxylgruppen, das Ausgangsmaterial B mindestens eine Verbindung, ausgewählt aus der Gruppe, bestehend aus polyfunktionellen Polyisocyanatverbindungen, organischen Aluminiumverbindungen und Erdalkalimetalloxiden darstellt, und mindestens eines der Ausgangsmaterialien A und B eine Verbindung mit mehr als zwei funktionellen Gruppen umfasst;
die Reaktionsverbindung hergestellt wird durch dreidimensionales Vernetzen der Ausgangsmaterialien A und B durch eine andere Reaktion als eine radikalische Reaktion zwischen den reaktiven Substituentengruppen und dem Ausgangsmaterial B, und
die Reaktionsverbindung hergestellt wird durch Quellen lassen durch das Flüssigphasen-Monomer 1, das durch eine radikalische Polymerisationsreaktion polymerisiert werden kann.

7. Verfahren zur Herstellung einer Formmasse nach Anspruch 6, worin die Reaktion zwischen den reaktiven Substituentengruppen und dem Ausgangsmaterial B eine der Reaktionen ist zwischen polyfunktionellen Polyisocyanatverbindungen und Hydroxylgruppen oder Carboxylgruppen und zwischen Carboxylgruppen und organischen Aluminiumverbindungen oder Erdalkalimetalloxiden.

8. Verfahren zur Herstellung einer Formmasse nach Anspruch 6 oder 7, worin die Viskosität der Reaktionsverbindung nicht kleiner als 10.000 Poise beträgt, wenn gemessen mit einem Helipath-Viskosimeter.

9. Verfahren zur Herstellung einer Formmasse nach irgendeinem der Ansprüche 6, 7 und 8, worin die Härte der Reaktionsverbindung nicht höher als 100 HDD beträgt, wenn mit einem Durometer-Härtetester vom Typ D gemessen.

10. Verfahren zur Herstellung einer Formmasse, umfassend die Schritte:
Bilden einer Reaktionsverbindung durch Verknüpfen eines Ausgangsmaterials A, mit einer Vielzahl von reaktiven Substituentengruppen, mit einem Ausgangsmaterial B, das mit dem Ausgangsmaterial A reaktiv ist durch eine andere Reaktion als eine radikalische Reaktion in Gegenwart eines Monomers 1 in flüssiger Phase, das durch eine radikalische Polymerisationsreaktion polymerisierbar ist;
Zugeben der Reaktionsverbindung zu einem Monomer 2, das mit dem Monomer 1 copolymerisierbar ist, und
Zerkleinern der Reaktionsverbindung auf eine vorbestimmte Größe nach dem Zugabeschritt,
wobei das Verfahren **dadurch** charakterisiert ist, dass:
das Ausgangsmaterial A eine Verbindung mit einer Vielzahl von reaktiven Substituentengruppen, die ausgewählt sind aus der Gruppe, bestehend aus Hydroxylgruppen und Carboxylgruppen, darstellt, das Ausgangsmaterial B mindestens eine Verbindung, ausgewählt aus der Gruppe, bestehend aus polyfunktionellen Polyisocyanatverbindungen, organischen Aluminiumverbindungen und Erdalkalimetalloxiden darstellt, und mindestens eines der Ausgangsmaterialien A und B eine Verbindung mit mehr als zwei funktionellen Gruppen umfasst;
die Reaktionsverbindung hergestellt wird durch dreidimensionales Vernetzen der Ausgangsmaterialien A und B durch eine andere Reaktion als eine radikalische Reaktion zwischen den reaktiven Substituentengruppen und dem Ausgangsmaterial B, und
die Reaktionsverbindung hergestellt wird durch Quellen lassen durch Kontakt mit dem Flüssigphasen-Monomer 1, das durch eine radikalische Polymerisationsreaktion polymerisiert werden kann.

11. Verfahren zur Herstellung einer Formmasse nach Anspruch 10, worin die Reaktion zwischen den reaktiven Substituentengruppen und dem Ausgangsmaterial B eine der Reaktionen darstellt zwischen polyfunktionellen Polyisocyanatverbindungen und Hydroxylgruppen oder Carboxylgruppen, und zwischen Carboxylgruppen und organischen Aluminiumverbindungen oder Erdalkalimetalloxiden.

12. Verfahren zur Herstellung einer Formmasse nach Anspruch 10 oder 11, worin die Viskosität der Reaktionsverbindung nicht weniger als 10.000 Poise beträgt, wenn gemessen mit einem Helipath-Viskosimeter.

13. Verfahren zur Herstellung einer Formmasse nach irgendeinem der Ansprüche 10, 11 und 12, worin die Härte der Reaktionsverbindung weniger als 100 HDD beträgt, wenn gemessen mit einem Durometer-Härtetester vom Typ D.

14. Verfahren zur Herstellung einer Formmasse, umfassend die Schritte:
Bilden einer primären Reaktionsverbindung durch Vernetzen eines Ausgangsmaterials A, mit einer Vielzahl von reaktiven Substituentengruppen mit einem Ausgangsmaterial B, das mit dem Ausgangsmaterial A reaktiv ist, durch eine andere Reaktion als eine radikalische Reaktion in Gegenwart eines Monomers 1 in flüssiger Phase, das durch eine radikalische Polymerisationsreaktion polymerisiert werden kann;
Bilden einer sekundären Reaktionsverbindung durch Zugeben eines Ausgangsmaterials C mit einer Vielzahl von reaktiven Substituentengruppen, ein Ausgangsmaterial D, das mit dem Ausgangsmaterial C reaktiv ist, sowie ein Monomer 3 in flüssiger Phase, das mit dem Monomer 1 zur primären Reaktionsverbindung copolymerisierbar ist,
Zerkleinern der resultierenden primären Reaktionsverbindung auf eine vorbestimmte Größe und Verknüpfen der Ausgangsmaterialien C und D durch eine andere Reaktion als eine radikalische Reaktion;
Zugeben der sekundären Reaktionsverbindung zu einem Monomer 2, das mit den Monomeren 1 und 3 copolymerisierbar ist, und
Zerkleinern der sekundären Reaktionsverbindung auf eine vorbestimmte Größe nach dem Zugabeschritt,
wobei das Verfahren **dadurch** charakterisiert ist, dass:
die Ausgangsmaterialien A und C jeweils Verbindungen mit einer Vielzahl von reaktiven Substituentengruppen sind, die ausgewählt sind aus der Gruppe, bestehend aus Hydroxylgruppen und Carboxylgruppen, jedes der Ausgangsmaterialien B und D mindestens eine Verbindung ist, ausgewählt aus der Gruppe, bestehend aus polyfunktionellen Polyisocyanatverbindungen, organischen Aluminiumverbindungen und Erdalkalimetalloxiden, mindestens eines der Ausgangsmateralien A und B eine Verbindung mit mehr als zwei funktionellen Gruppen umfasst, und mindestens eines der Ausgangsmaterialien C und D eine Verbindung mit mehr als zwei funktionellen Gruppen umfasst;
die primäre Reaktionsverbindung hergestellt wird durch dreidimensionales Vernetzen der Ausgangsmaterialien A und B durch eine andere Reaktion als eine radikalische Reaktion zwischen den reaktiven Substituentengruppen und dem Ausgangsmaterial B;
die sekundäre Reaktionsverbindung hergestellt wird durch dreidimensionales Vernetzen der Ausgangsmaterialien C und D durch eine andere Reaktion als eine radikalische Reaktion zwischen den reaktiven Substituentengruppen und dem Ausgangsmaterial D, und die primären und sekundären Reaktionsverbindungen jeweils hergestellt werden durch Quellen lassen durch Kontakt mit den Flüssigphasen-Monomeren 1, 2 und 3, die durch eine radikalische Polymerisationsreaktion polymerisiert werden können.

15. Verfahren zur Herstellung einer Formmasse nach Anspruch 14, worin die Reaktion zwischen den reaktiven Substituentengruppen und dem Ausgangsmaterial B eine der Reaktionen darstellt zwischen polyfunktionellen Polyisocyanatverbindungen und Hydroxylgruppen oder Carboxylgruppen und zwischen Carboxylgruppen und organischen Aluminiumverbindungen oder Erdalkalimetalloxiden.

16. Verfahren zur Herstellung einer Formmasse nach Anspruch 14 oder 15, worin die Viskosität der primären Reaktionsverbindung und der sekundären Reaktionsverbindung nicht weniger als 10.000 Poise beträgt, wenn gemessen mit einem Helipath-Viskosimeter.

17. Verfahren zur Herstellung einer Formmasse nach irgendeinem der Ansprüche 14, 15 und 16, worin die Härte der primären Reaktionsverbindung und der sekundären Reaktionsverbindung weniger als 100 HDD beträgt, wenn gemessen mit einem Durometer-Härtetester vom Typ D.

18. Form, hergestellt durch Formen einer Formmasse, hergestellt durch Zerkleinern einer Zusammensetzung auf eine vorbestimmte Größe, enthaltend eine Reaktionsverbindung, die durch Verknüpfen eines Ausgangsmaterials A mit einer Vielzahl von reaktiven Substituentengruppen mit einem Ausgangsmaterial B, das mit dem Ausgangsmaterial A reaktiv ist, durch eine andere Reaktion als eine radikalische Reaktion, sowie ein Monomer 1 in flüssiger Phase, das durch eine radikalische Polymerisationsreaktion polymerisierbar ist, gebildet wird;
wobei die Form **dadurch** charakterisiert wird, dass:
das Ausgangsmaterial A eine Verbindung mit einer Vielzahl von reaktiven Substituentengruppen darstellt, die ausgewählt sind aus der Gruppe, bestehend aus Hydroxylgruppen und Carboxylgruppen, das Ausgangsmaterial B mindestens eine Verbindung darstellt, ausgewählt aus der Gruppe, bestehend aus polyfunktionellen Polyisocyanatverbindungen, organischen Aluminiumverbindungen und Erdalkalimetalloxiden, und mindestens eines der Ausgangsmaterialien A und B eine Verbindung mit mehr als zwei funktionellen Gruppen umfasst;
die Reaktionsverbindung hergestellt wird durch dreidimensionales Vernetzen der Ausgangsmaterialien A und B durch eine andere Reaktion als eine radikalische Reaktion zwischen den reaktiven Substituentengruppen und dem Ausgangsmaterial B, und
die Zusammensetzung hergestellt wird durch Quellen lassen der Reaktionsverbindung durch Kontakt mit dem Flüssigphasen-Monomer 1, das durch eine radikalische Polymerisationsreaktion polymerisiert werden kann.

## Revendications

1. Composé de moulage préparé en concassant dans une taille prédéterminée, une composition contenant un composé de réaction qui est formé au moyen de la liaison d'un matériau de démarrage A ayant une pluralité de groupes substituants réactifs, avec un matériau de démarrage B qui réagit avec ledit matériau de démarrage A au moyen d'une réaction autre qu'une réaction par radicaux, et un monomère 1 en phase liquide qui est polymérisable au moyen d'une réaction de polymérisation par radicaux,
le composé de moulage étant **caractérisé en ce que** :
le matériau de démarrage A est un composé ayant une pluralité de groupes substituants réactifs que l'on choisit parmi le groupe comportant les groupes hydroxyle et les groupes carboxyle, le matériau de démarrage B est au moins un composé que l'on choisit parmi le groupe comportant les composés polyisocyanate polyfonctionnels, les composés d'aluminium organique, et des oxydes métalliques alcalino-terreux, et au moins un des matériaux de démarrage A et B comprend un composé ayant plus de deux groupes fonctionnels ;
le composé de réaction est produit en réticulant en trois dimensions les matériaux de démarrage A et B au moyen d'une réaction autre qu'une réaction par radicaux entre les groupes substituants réactifs et le matériau de démarrage B ; et
la composition est produite par gonflement du composé de réaction par contact avec le monomère 1 en phase liquide qui peut être polymérisé au moyen d'une réaction de polymérisation par radicaux.

2. Composé de moulage tel qu'énoncé dans la revendication 1, dans lequel une forme d'une surface fragmentée de la composition est retenue.

3. Composé de moulage tel qu'énoncé dans la revendication 1 ou 2, dans lequel la réaction entre les groupes substituants réactifs et le matériau de démarrage B est l'une d'une réaction entre des composés polyisocyanate polyfonctionnels et des groupes hydroxyle ou des groupes carboxyle et une réaction entre des groupes carboxyle et des composés d'aluminium organique ou des oxydes de métaux alcalino-terreux.

4. Composé de moulage tel qu'énoncé dans l'une des revendications 1, 2, et 3, dans lequel une viscosité du composé de réaction n'est pas inférieure à 10 000 poises lorsqu'on la mesure avec un viscosimètre Helipath.

5. Composé de moulage tel qu'énoncé dans l'une quelconque des revendications 1, 2, 3, et 4, dans lequel, une dureté des composés de réaction n'est pas supérieure à 100 HDD lorsqu'on la mesure avec un duromètre testeur de dureté de type D.

6. Procédé pour préparer un composé de moulage, comprenant les étapes de :
mélange d'un matériau de démarrage A ayant une pluralité de groupes substituants réactifs, un matériau de démarrage B qui réagit avec le matériau de démarrage A, et un monomère 1 en phase liquide qui est polymérisable au moyen d'une réaction de polymérisation par radicaux :
formation d'un composé de réaction en réticulant les matériaux de démarrage A et B au moyen d'une réaction autre qu'une réaction par radicaux après l'étape de mélange : et
concassage du composé de réaction dans une taille prédéterminée,
le procédé étant **caractérisé en ce que** :
le matériau de démarrage A est un composé ayant une pluralité de groupes substituants réactifs que l'on choisit parmi le groupe comportant les groupes hydroxyle et les groupes carboxyle, le matériau de démarrage B est au moins un composé que l'on choisit parmi le groupe comportant les composés polyisocyanate polyfonctionnels, les composés d'aluminium organique, et des oxydes métalliques alcalino-terreux, et au moins un des matériaux de démarrage A et B comprend un composé ayant plus de deux groupes fonctionnels ;
le composé de réaction est produit en réticulant en trois dimensions les matériaux de démarrage A et B au moyen d'une réaction autre qu'une réaction par radicaux entre les groupes substituants réactifs et le matériau de démarrage B ; et
le composé de réaction est produit par gonflement du composé de réaction par contact avec le monomère 1 en phase liquide qui peut être polymérisé au moyen d'une réaction de polymérisation par radicaux.

7. Procédé pour la préparation d'un composé de moulage tel qu'énoncé dans la revendication 6, dans lequel la réaction entre les groupes substituants réactifs et le matériau de démarrage B est l'une d'une réaction entre des composés polyisocyanate polyfonctionnels et des groupes hydroxyle ou des groupes carboxyle et d'une réaction entre des groupes carboxyle et des composés d'aluminium organique ou des oxydes de métaux alcalino-terreux.

8. Procédé pour la préparation d'un composé de moulage tel qu'énoncé dans la revendication 6 ou 7, dans lequel une viscosité du composé de réaction n'est pas inférieure à 10 000 poises lorsqu'on la mesure avec un viscosimètre de type Helipath.

9. Procédé pour la préparation d'un composé de moulage tel qu'énoncé dans l'une quelconque des revendications 6, 7, et 8, dans lequel une dureté du composé de réaction n'est pas supérieure à 100 HDD lorsqu'on la mesure avec un duromètre testeur de dureté de type D.

10. Procédé pour la préparation d'un composé de moulage, comprenant les étapes de :
formation d'un composé de réaction en liant un matériau de démarrage A ayant une pluralité de groupes substituants réactifs avec un matériau de démarrage B qui réagit avec le matériau de démarrage A au moyen d'une réaction autre qu'une réaction par radicaux et en présence d'un monomère 1 en phase liquide qui est polymérisable au moyen d'une réaction de polymérisation par radicaux ;
addition du composé de réaction à un monomère 2 copolymérisable avec le monomère 1 ; et
concassage du composé de réaction dans une taille prédéterminée après l'étape d'addition,
le procédé étant **caractérisé en ce que** :
le matériau de démarrage A est un composé ayant une pluralité de groupes substituants réactifs que l'on choisit parmi le groupe comportant les groupes hydroxyle et les groupes carboxyle, le matériau de démarrage B est au moins un composé que l'on choisit parmi le groupe comportant les composés polyisocyanate polyfonctionnels, les composés d'aluminium organique, et les oxydes métalliques alcalino-terreux, et au moins un des matériaux de démarrage A et B comprend un composé ayant plus de deux groupes fonctionnels ;
le composé de réaction est produit en réticulant en trois dimensions les matériaux de démarrage A et B au moyen d'une réaction autre qu'une réaction par radicaux entre les groupes substituants réactifs et le matériau de démarrage B ; et
le composé de réaction est produit par gonflement du composé de réaction par contact avec le monomère 1 en phase liquide qui peut être polymérisé au moyen d'une réaction de polymérisation par radicaux.

11. Procédé pour la préparation d'un composé de moulage tel qu'énoncé dans la revendication 10, dans lequel la réaction entre les groupes substituants réactifs et le matériau de démarrage B est l'une d'une réaction entre des composés polyisocyanate polyfonctionnels et des groupes hydroxyle ou des groupes carboxyle et d'une réaction entre des groupes carboxyle et des composés d'aluminium organique ou des oxydes de métaux alcalino-terreux.

12. Procédé pour la préparation d'un composé de moulage tel qu'énoncé dans la revendication 10 ou 11, dans lequel une viscosité du composé de réaction n'est pas inférieure à 10 000 poises lorsqu'on la mesure avec un viscosimètre de type Helipath.

13. Procédé pour la préparation d'un composé de moulage tel qu'énoncé dans l'une quelconque des revendications 10, 11, et 12, dans lequel une dureté du composé de réaction est inférieure à 100 HDD lorsqu'on la mesure avec un duromètre testeur de dureté de type D.

14. Procédé pour la préparation d'un composé de moulage, comprenant les étapes de :
formation d'un composé de réaction primaire en liant un matériau de démarrage A ayant une pluralité de groupes substituants réactifs avec un matériau de démarrage B qui réagit avec le matériau de démarrage A au moyen d'une réaction autre qu'une réaction par radicaux et en présence d'un monomère 1 en phase liquide qui est polymérisable au moyen d'une réaction de polymérisation par radicaux :
formation d'un composé de réaction secondaire en additionnant un matériau de démarrage C ayant une pluralité de groupes substituants réactifs, un matériau de démarrage D qui réagit avec le matériau de démarrage C et un monomère 3 en phase liquide copolymérisable avec le monomère 1 vers le composé de réaction primaire, concassant le composé de réaction primaire résultant dans une taille prédéterminée, et liant les matériaux de démarrage C et D au moyen d'une réaction autre qu'une réaction par radicaux ;
addition du composé de réaction secondaire à un monomère 2 copolymérisable avec les monomères 1 et 3 ; et
concassant le composé de réaction secondaire dans une taille prédéterminée après l'étape d'addition,
le procédé étant **caractérisé en ce que** :
les matériaux de démarrage A et C sont des composés ayant chacun une pluralité de groupes substituants réactifs que l'on choisit parmi le groupe qui comporte les groupes hydroxyle et les groupes carboxyle, chacun des matériaux de démarrage B et D est au moins un composé que l'on choisit parmi le groupe comportant les composés polyisocyanate polyfonctionnels, les composés d'aluminium organique, et les oxydes de métaux alcalino-terreux, au moins un des matériaux de démarrage A et B comprend un composé ayant plus de deux groupes fonctionnels, et au moins un des matériaux de démarrage C et D comprend un composé ayant plus de deux groupes fonctionnels ;
le composé de réaction primaire est produit en réticulant en trois dimensions les matériaux de démarrage A et B au moyen d'une réaction autre qu'une réaction par radicaux entre les groupes substituants réactifs et le matériau de démarrage B ;
le composé de réaction secondaire est produit en réticulant en trois dimensions les matériaux de démarrage C et D au moyen d'une réaction autre qu'une réaction par radicaux entre les groupes substituants réactifs et le matériau de démarrage D ; et
les composés primaire et secondaire sont produits chacun par gonflement par contact avec les monomères en phase liquide 1, 2, et 3 que l'on peut polymériser au moyen d'une réaction de polymérisation par radicaux.

15. Procédé pour la préparation d'un composé de moulage tel qu'énoncé dans la revendication 14, dans lequel la réaction entre les groupes substituants réactifs et le matériau de démarrage B est l'une d'une réaction entre des composés polyisocyanate polyfonctionnels et des groupes hydroxyle ou des groupes carboxyle et d'une réaction entre des groupes carboxyle et des composés d'aluminium organique ou des oxydes de métaux alcalino-terreux.

16. Procédé pour la préparation d'un composé de moulage tel qu'énoncé dans la revendication 14 ou 15, dans lequel une viscosité du composé de réaction primaire et du composé de réaction secondaire n'est pas inférieure à 10 000 poises lorsqu'on la mesure avec un viscosimètre de type Helipath.

17. Procédé pour la préparation d'un composé de moulage tel qu'énoncé dans l'une quelconque des revendications 14, 15, et 16, dans lequel une dureté du composé de réaction primaire et du composé de réaction secondaire inférieure à 100 HDD lorsqu'on la mesure avec un duromètre testeur de dureté de type D.

18. Moulage produit par moulage d'un composé de moulage que l'on prépare en concassant dans une taille prédéterminée, d'une composition contenant un composé de réaction que l'on forme en réticulant un matériau de démarrage A ayant une pluralité de groupes substituants réactifs, avec un matériau de démarrage B qui réagit avec le matériau de démarrage A au moyen d'une réaction autre qu'une réaction par radicaux, et un monomère 1 en phase liquide qui est polymérisable au moyen d'une réaction de polymérisation par radicaux,
le moulage étant **caractérisé en ce que** :
le matériau de démarrage A est un composé ayant une pluralité de groupes substituants réactifs que l'on choisit parmi le groupe comportant les groupes hydroxyle et les groupes carboxyle, le matériau de démarrage B est au moins un composé que l'on choisit parmi le groupe comportant les composés polyisocyanate polyfonctionnels, les composés d'aluminium organique, et des oxydes métalliques alcalino-terreux, et au moins un des matériaux de démarrage A et B comprend un composé ayant plus de deux groupes fonctionnels ;
le composé de réaction est produit en réticulant en trois dimensions les matériaux de démarrage A et B au moyen d'une réaction autre qu'une réaction par radicaux entre les groupes substituants réactifs et le matériau de démarrage B ; et
la composition par gonflement est produite du composé de réaction par contact avec le monomère 1 en phase liquide qui peut être polymérisé au moyen d'une réaction de polymérisation par radicaux.
